# EUROPEAN PATENT APPLICATION

(11) **EP 2 631 403 A2**
(43) Date of publication of application: **28.08.2013**
(21) Application number: 13156012.0
(22) Date of filing: 20.02.2013
(51) Int. Cl.: E05F 15/00

(54) **Mechanical anti-jamming device of power-operated roof panel systems**

(30) Priority: 27.02.2012 SE 1250170
(71) Applicant: Scania CV AB (publ), 151 87 Södertälje (SE)
(72) Inventor: Lundin, Michael, SE-121 33 ENSKEDEDALEN (SE)

(57) **Abstract**

A device (2) for opening and closing a roof panel system (4) in a vehicle, which device (2) is adapted to move the roof panel system (4) in an essentially vertical direction, where the device (2) comprises an opening means (6) adapted to open and close the roof panel system (4), and the opening means (6) comprises a first activating element (8) and a second activating element (10). The device (2) further comprises a drive unit (12) adapted to generate rotational movements in a first direction (A) and a second direction (B), and a coupling unit (14) positioned between said opening means (6) and said drive unit (12) and adapted to transmit rotational movements from said drive unit (12) to said opening means (6). The coupling unit (14) comprises a first coupling element (16) and a second coupling element (18), where the drive unit (12) is adapted to rotate said first coupling element (16) which is adapted to transmit the rotation to said second coupling element (18) when the roof panel system's gravitational force, via the opening means (6), acts on said second coupling element (18) with an essentially vertical downward force exceeding a predetermined threshold value.

## Description

### Field of the invention

The present invention relates to a device according to the preamble of the independent claim.

### Background to the invention

Electrically activated roof panel systems are preferably equipped with an anti-jamming device primarily to prevent personal injury but also material damage if, e.g. a hand or other object is placed in the path of the roof panel system as it is about to close.

Roof panel systems may have different movement patterns and, in trucks, the roof panel system is usually opened by lifting the rear edge, whereas the roof panel system is articulatedly fastened to the roof at the front edge.

Known solutions for detecting whether an object is at risk of becoming jammed when closing the roof panel system require control units and possibly sensors, which are often expensive solutions. These sensors, which are used for power measurement and/or positioning, also require careful calibration to ensure proper functioning. For final closure (tilting), power measurement is also difficult as the mechanical element/transmission is such that quite high jamming forces arise before the jamming is detected. Anti-jamming devices are unusual in this context. Anti-jamming sensors are the best known solution in such a case.

Several solutions are available for preventing objects from becoming jammed in connection with the closure of a roof panel system. A number of patent documents depicting said solutions are presented below.

US20030115801 describes a device for preventing objects becoming jammed in moving panels in a vehicle. The anti-jamming device comprises *inter alia* a spring mechanism. When a force is applied to the spring which is then compressed, the closing movement of the moving part will be arrested.

US20080236044 describes an anti-jamming device to prevent objects becoming jammed, e.g. in a roof panel system. The anti-jamming device comprises a device variably connected to a part of the vehicle, as well as a detection device for detecting movement between the device and the detection device.

US20030038606 depicts an electromechanical anti-jamming device, for example, a side window in a vehicle. According to this device, the load acting on the motor which controls the shutting of the window is monitored and, if anything becomes jammed, the device will deactivate the motor so the object can be removed.

WO2011003816 depicts an anti-jamming device, e.g. for a roof panel system. A limit value is defined indicating how great the force on the closing part should be. If the value is exceeded, this indicates something is in the way.

DE102009020340 describes an anti-jamming device which prevents fingers becoming jammed. The anti-jamming device comprises *inter alia* a cylinder comprising a rod which is axially moveable relative to the cylinder. The spring function is arranged in the cylinder. The technical solution is used in areas other than roof panel systems.

The object of the present invention is to provide an opening device for a roof panel system which has a simple, safe and robust function and a relatively low manufacturing cost.

### Summary of the invention

The aforesaid object is achieved according to the invention defined by the independent claim.

Preferred embodiments are defined by the dependent claims.

The object is therefore achieved, according to the invention, with a device for opening and closing a roof panel system in a vehicle, which device is adapted to move the roof panel system in an essentially vertical direction, which device comprises an opening means adapted to open and close the roof panel system, which opening means comprises a first activating element and a second activating element. A drive unit is further provided which is adapted to generate rotational movements in a first direction (A) and a second direction (B), and a coupling unit is positioned between said opening means and said drive unit and adapted to transmit rotational movements from the drive unit to the opening means. The coupling unit comprises a first coupling element and a second coupling element, where the drive unit is adapted to rotate said first coupling element, which is adapted to transmit the rotation to the second coupling element when the roof panel system's gravitational force, via the opening means, acts on the second coupling element with an essentially vertical downward force exceeding a predetermined threshold value. The coupling unit is adapted to be either in a coupled position, where the second coupling element engages the first coupling element so the rotation generated by the drive unit is transmitted to said opening means in order to open or close the roof panel system, or in a non-coupled position, where the second coupling element does not engage the first coupling element and the rotation is not transmitted to said opening means, which non-coupled position prevails when said essentially vertical downward force is below said predetermined threshold value.

According to one embodiment, the first activating element is a drive shaft in the form of a tube with a circular cross-section which is equipped with threads on at least one section of the outer side, and the second activating element is a bearing sleeve in the form of a tube with a circular cross-section which is equipped with threads on the inner side, where the threads on the outer side of the drive shaft may engage the threads on the inner side of the bearing sleeve. The bearing sleeve is adapted to be mounted in the roof panel system and adapted to engage the drive shaft such that, when the drive shaft rotates in the first direction (A), the roof panel system opens and when the drive shaft rotates in the second direction (B), the roof panel system closes.

A mechanical anti-jamming device according to the invention, with relatively few parts, enables the function to be achieved with a simpler and cheaper control unit or even without a control unit altogether when it is not dependent on any electronic system. It also comprises a locking function which moves the roof panel system the final millimetres and exerts compression on the seals.

The invention therefore relates to a mechanical anti-jamming device for the tilt movement in power-operated roof panel systems, thereby removing the need for sensors and/or control units for this function.

### Brief description of the drawings

Figure 1 depicts a schematic cross-section of a roof panel system where the device according to the invention is positioned.
Figures 2-4 depict a cross-section of the device according to the present invention in different positions.
Figures 5-7 illustrate schematically different embodiments of the coupling unit according to the present invention.

### Detailed description of preferred embodiments of the invention

The invention will now be described in detail with reference to the attached drawings.

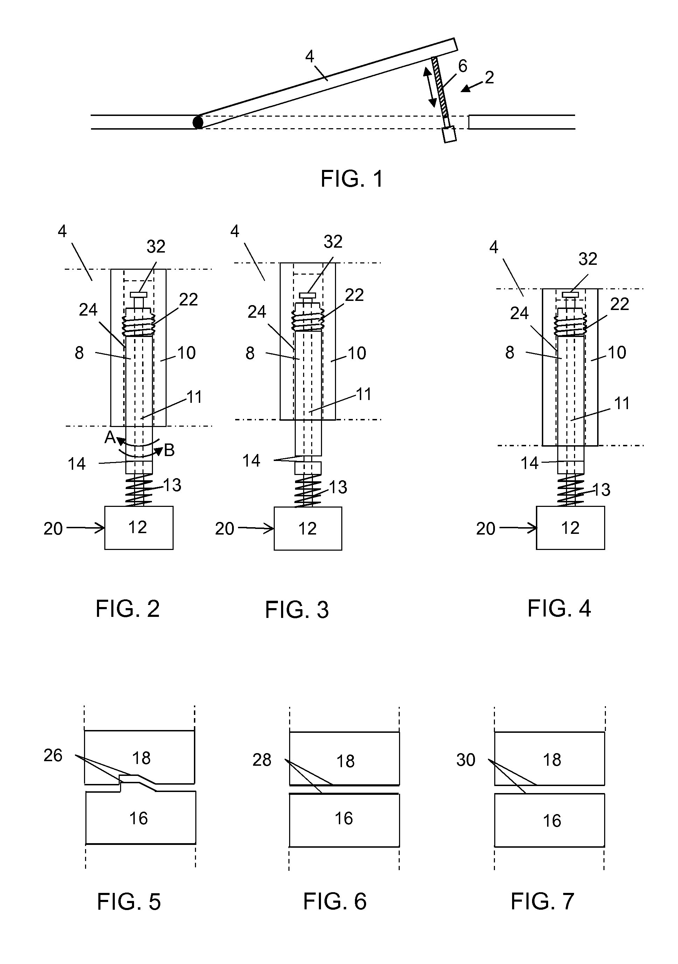

Figure 1 depicts a schematic cross-section of a roof panel system 4, preferably mounted in a vehicle, equipped with a device 2 for opening and closing the roof panel system 4, which device 2 is adapted to move the roof panel system 4 in an essentially vertical direction. The device 2 comprises an opening means 6 which is adapted to open and close the roof panel system 4, which opening means 6 comprises a first activating element 8 and a second activating element 10. The device further comprises a drive unit 12, which is adapted to generate rotational movements in a first direction (A) and a second direction (B), and a coupling unit 14 positioned between said opening means 6 and said drive unit 12 and adapted to transmit rotational movements from the drive unit 12 to the opening means 6.

The coupling unit 14 comprises a first coupling element 16 and a second coupling element 18 and the drive unit 12 is adapted to rotate said first coupling element 16, which is adapted to transmit the rotation to the second coupling element 18, when the roof panel system's gravitational force, via the opening means 6, acts on said second coupling element 18 with an essentially vertical downward force exceeding a predetermined threshold value.

The coupling unit 14 is adapted to be either in a coupled position, where the second coupling element 18 engages the first coupling element 16 so the rotation generated by the drive unit 12 in direction A or B is transmitted to said opening means 6 in order to open or close the roof panel system. The coupling unit 14 is further adapted to be in a non-coupled position, where the second coupling element 18 does not engage the first coupling element 16 and the rotation is thus not transmitted to the opening means 6, which non-coupled position prevails when said essentially vertical downward force is below said predetermined threshold value. The non-coupled position occurs, for example, if an object is preventing the roof panel system from closing which means the downward force is reduced and jamming can be prevented if the object is, for example, a hand or a finger.

The drive unit 12 is adapted to receive control signals 20 containing instructions to open or close the roof panel system 4 by generating rotational movements in the first direction (A) or the second direction (B). These control signals may, for example, be generated via a control device connected to the instrument panel.

According to one embodiment, said first activating element 8 is a drive shaft in the form of a tube with a circular cross-section which is equipped with threads 22 on at least one section of the outer side. The second activating element 10 is a bearing sleeve in the form of a tube with a circular cross-section and equipped with threads 24 on the inner side. The threads 22 on the outer side of the drive shaft are adapted to engage the threads on the inner side of the bearing sleeve.

The bearing sleeve is adapted to be mounted in the roof panel system 4 and is thus adapted to engage the drive shaft such that, when the drive shaft rotates in the first direction (A), the roof panel system opens and when the drive shaft rotates in the second direction (B), the roof panel system closes. These rotational directions are depicted in Figure 2.

The bearing sleeve 10 is preferably mounted at the rear edge of the roof panel system and exerts a downward force due to the system's weight. The drive shaft 8 is threaded into the bearing sleeve 10 and, according to one embodiment, the second coupling element 18 is positioned on the lower edge of the drive shaft 8. A lock shaft 11 runs through the drive shaft 8 and runs freely inside the drive shaft 8.

At the lower end of the lock shaft 11, there is the drive unit 12, which may, for example, take the form of an electric motor, a drive gear which is driven by the electric motor with a worm wheel and which thus forms a worm gear. In the lower section of the lock shaft 11, there is the first coupling element 16, which may, for example, take the form of a spring-loaded toothed coupling. Figures 2-4 illustrate schematically a resilient unit 13, positioned beneath the first coupling element 16, which may, for example, take the form of a spiral spring or a resilient rubber cylinder. The first coupling element 16 is mounted on, and rotates constantly with, the lock shaft 11 but preferably has a small amount of linear play with the lock shaft 11.

The embodiment with the spring-loaded toothed coupling is illustrated in Figure 5 and will be described in further detail below.

When opening the roof panel system, the drive unit drives the lock shaft 11 in the first rotational direction A, the coupling unit 14 is in its coupled position and the drive shaft 8 drives the bearing sleeve 10, and thereby the roof panel system, upwards.

When closing, the motor drives the lock shaft 11 in the second rotational direction B, the coupling unit 14 is in its coupled position and the drive shaft 8 in turn drives the bearing sleeve 10 and the roof panel system downwards.

If an object becomes jammed between the roof panel system and the roof, the downward force acting on the bearing sleeve 10 is released (as it is connected to the roof panel system) and the coupling unit 14 releases the driving force on the drive shaft 8 preventing the roof panel system being driven downwards. The motor, however, continues to operate and drives the lock shaft 11 as long as it is activated.

Figures 5-7 illustrate schematically different embodiments of the coupling unit according to the present invention. In all these embodiments, if the downward force acting on the coupling unit exceeds a threshold value, the coupling unit must transfer the rotation to the opening means 6. The size of this threshold value depends inter alia on the weight of the roof panel system. The threshold value must be high enough to ensure normal function for the device, i.e. to ensure the roof panel system is able to open and close without interference.

According to one embodiment, as illustrated in the schematic pictures in Figure 5, said first and second coupling elements 16, 18 are equipped with interlocking teeth 26 for transmitting the rotation from the first coupling element 16 to the second coupling element 18. The design of the teeth may obviously take very different forms. The figure depicts a tooth shaped such that if the drive unit 12 rotates the first coupling element 16 in the rotational direction B, i.e. the roof panel is about to close, the coupling will slip and ultimately be released when the teeth disengage when the downward force is reduced.

According to one embodiment, as illustrated in the schematic drawings in Figure 6, said first and second coupling elements 16, 18 are equipped with friction material 28 for transmitting the rotation from the first coupling element 16 to the second coupling element 18. The friction material may, for example, take the form of roughened metal surfaces or blasted surfaces.

According to one embodiment, as illustrated in the schematic drawings in Figure 6, said first and second coupling elements 16, 18 are equipped with a magnetic material 30 for transmitting the rotation from the first coupling element 16 to the second coupling element 18. The magnetic material is arranged on the coupling elements 16, 18, for example by giving the different coupling elements the opposite magnetic polarity with a magnetic contraction force which is relative to the threshold value for the downward force. This means that, when the coupling elements are forced away from each other, the rotation will not be transmitted and the coupling is thereby released.

According to a further embodiment, the opening means 2 is equipped with a locking means 32 adapted to engage the roof panel system, either via the locking sleeve or directly with the roof panel system, to lock the roof panel system in the closed position. The locking means preferably forms the top part of the lock shaft 11.

The locking means functions such that, when the roof panel system is only a few millimetres from its closed position, the drive shaft 8 is screwed almost to the bottom of the bearing sleeve 10 and the lock shaft's 11 top section, the locking means 32, acts on the bottom of the bearing sleeve 11 and drives the final distance, locking the roof panel system so that it cannot be lifted up as the drive shaft 8 has no linear locking mechanism on the lock shaft 11. The locking mechanism may, for example, take the form of a thread smaller than that on the drive shaft, a bayonet coupling or similar.

The present invention also comprises a vehicle, for example a truck, car or bus, comprising a roof panel system adapted to be opened and closed with at least one device as described above with reference to the figures.

The present invention is not limited to the preferred embodiments described above. Various alternatives, modifications and equivalents may be used. The aforesaid embodiments therefore should therefore not be considered to limit the scope of the invention which is defined by the attached claims.

## Claims

1. A device (2) for opening and closing a roof panel system (4) in a vehicle, which device (2) is adapted to move the roof panel system (4) in an essentially vertical direction, where the device (2) comprises an opening means (6) adapted to open and close the roof panel system (4) and the opening means (6) comprises a first activating element (8) and a second activating element (10), a drive unit (12), adapted to generate rotational movements in a first direction (A) and second direction (B), and a coupling unit (14) positioned between said opening means (6) and said drive unit (12) and adapted to transmit rotational movements from said drive unit (12) to said opening means (6), **characterised in that** said coupling unit (14) comprises a first coupling element (16) and a second coupling element (18), where the drive unit (12) is adapted to rotate said first coupling element (16) which is adapted to transmit the rotation to said second coupling unit (18) when the roof panel system's gravitational-force, via said opening means (6), exerts an essentially vertical downward force on said second coupling element (18) exceeding a predetermined threshold value, where the coupling unit (14) is adapted to be either in a coupled position, where the second coupling element (18) engages the first coupling element (16) so that the rotation generated by the drive unit (12) is transmitted to said opening means (6) in order to open or close the roof panel system, or in a non-coupled position, where the second coupling element (18) does not engage the first coupling element (16) and the rotation is not transmitted to said opening means (6), which non-coupled position prevails when said essentially vertical downward force is below said predetermined threshold value.

2. Device according to claim 1, where said drive unit (12) is adapted to receive control signals (20) containing instructions to open or close the roof panel system (4) by generating rotational movements in the first direction (A) or second direction (B).

3. Device according to claims 1 or 2, where said first activating element (8) is a drive shaft in the form of a tube with a circular cross-section and which is equipped with threads (22) on at least one section of the outer side, and the second activating element (10) is a bearing sleeve in the form of a tube with a circular cross-section and which is equipped with threads (24) on the inner side, where the bearing sleeve is adapted to be mounted in the roof panel system (4) and adapted to engage the drive shaft in such a way that when the drive shaft rotates in the first direction (A) the roof panel system opens and when the drive shaft rotates in the second direction (B), the roof panel system closes.

4. Device according to any one of claims 1-3, where said first and second coupling elements (16, 18) are equipped with interlocking teeth (26) for transmitting the rotation from the first coupling element (16) to the second coupling element (18).

5. Device according to any one of claims 1-3, where said first and second coupling elements (16, 18) are equipped with friction material (28) for transmitting the rotation from the first coupling element (16) to the second coupling element (18).

6. Device according to any one of claims 1-3, where said first and second coupling elements (16, 18) are equipped with a magnetic material (30) for transmitting the rotation from the first coupling element (16) to the second coupling element (18).

7. Device according to any one of claims 1-6, where said opening means is equipped with a locking means (32) adapted to engage the roof panel system in order to lock the roof panel system in the closed position.

8. Device according to claim 7, where said locking means (32) is a bayonet coupling.

9. Device according to claim 7, where said locking means (32) is a thread.

10. A vehicle comprising a roof panel system adapted to be opened or closed by at least one device according to any one of claims 1-9.
